Europäisches Patentamt

European Patent Office

Office européen des brevets

(11) Veröffentlichungsnummer: **0 361 148**
**A1**

## EUROPÄISCHE PATENTANMELDUNG

(21) Anmeldenummer: 89116416.2

(51) Int. Cl.5 **C04B 35/58**

(22) Anmeldetag: 06.09.89

(30) Priorität: **10.09.88 DE 3830851**

(43) Veröffentlichungstag der Anmeldung:
**04.04.90 Patentblatt 90/14**

(84) Benannte Vertragsstaaten:
**DE FR GB**

(71) Anmelder: **HOECHST AKTIENGESELLSCHAFT**
**Postfach 80 03 20**
**D-6230 Frankfurt am Main 80(DE)**

(72) Erfinder: **Peuckert, Marcellus, Dr.**
**Platanenweg 8**
**D-6238 Hofheim am Taunus(DE)**

(54) Siliziumnitrid-Keramik und Verfahren zu ihrer Herstellung.

(57) Beschrieben wird ein Verfahren zur Herstellung einer $Si_3N_4$-Keramik hoher Festigkeit, wobei man $\alpha$-$Si_3N_4$-Pulver mit geringen Mengen von mindestens einem der Elemente La, Ce, Pr, Nd, Sm, Eu, Gd, Tb, Dy, Ho und Y in Form eines Oxide oder Oxidvorläufers vermischt, man das Gemisch zu einem Formkörper verformt und den Formkörper bei Drucken von 1 - 100 bar in einer Stickstoff-Atmosphäre und bei Temperaturen von 1750-2000° C sintert.

Der gesintere Körper wird mindestens 10 Stunden in Schutzgasatmosphäre, auf Temperaturen von 1200 - 1500° C erhitzt und anschließend abgekühlt. Dabei kommt es zur Bildung von kristallinen Apatiten der Formel $A_{4+x}(SiO_4)_3N_x$, wobei A das in Form des Oxids oder Oxidvorläufers zugegebene Element und x eine Zahl, die größer als Null und maximal 1 ist, bedeutet.

EP 0 361 148 A1

## Siliziumnitrid-Keramik und Verfahren zu ihrer Herstellung

Die vorliegende Erfindung betrifft ein Verfahren zur Herstellung einer $Si_3N_4$-Keramik mit hoher Festigkeit bei niedrigen und hohen Temperaturen durch Sintern von Pulvermischungen, die Siliziumnitrid und Zuschlagstoffe enthalten. Die Erfindung betrifft ferner Siliziumnitrid-Formkörper, die nach diesem Verfahren herstellbar sind und in der intergranularen Phase bestimmte Stickstoff enthaltende Silikate mit der Kristallstruktur von Apatit enthalten.

Siliziumnitrid its wegen seiner hohen Festigkeit ein wichtiger Werkstoff für zahlreiche Anwendungen im Maschinenbau. Neben hoher Festigkeit bei Raumtemperatur wird dabei auch eine hohe Festigkeit bei Temperaturen oberhalb 1 000 °C angestrebt. Siliziumnitrid-Keramik wird im allgemeinen aus $\alpha$-$Si_3N_4$-Pulver unter Einsatz von oxidischen Sinteradditiven, wie z. B. MgO, $Al_2O_3$ oder $Y_2O_3$ durch Mischen, Mahlen, Verformen und schließlich Sintern hergestellt. Die Formgebung kann z. B. mittels Pressen, Schlickergießen oder durch Spritzguß erfolgen. Das Sintern wird in Stickstoffatomosphäre unter Normaldruck oder erhöhtem Druck bis etwa 100 bar oder mittels heißisostatischem Pressen bei Drücken bis 2 000 bar durchgeführt. Die Sintertemperaturen liegen im Bereich von 1 750 bis 2 000 °C. Üblicherweise werden je nach dem angewandten Sinterverfahren 5 bis 20 Gew.-% an oxidischen Sinterhilfsmitteln zum Siliziumnitrid zugesetzt, wobei um so weniger Sinterhilfsmittel benötigt werden, je höher Druck und Temperatur gewählt werden. Nach dem Sintern liegen diese Sinterhilfsmittel in Form einer amorphen, intergranularen Glasphase in der Siliziumnitrid-Keramik vor.

Es ist bereits bekannt, daß bei bestimmter Zusammensetzung aus dieser amorphen Zwischenkornphase beim Sintern kristalline Phasen auskristallisieren können. Bei Einsatz von $Y_2O_3$ als Sinterhilfsmittel kann sich z. B. $Y_4Si_2O_7N_2$ ($Si_3N_4$ $SiO_2$ $4Y_2O_3$), $YSiO_2N$ ($Si_3N_4$ $SiO_2$ $2Y_2O_3$) oder $Y_{10}Si_7O_{23}N_4$ ($Si_3N_4$ $4SiO_2$ $5Y_2O_3$) bilden (US-PS 4,388,414). Die Bildung dieser Y-haltigen kristallinen Phasen wirkt sich günstig auf die Oxidationsbeständigkeit und in geringem Maß auch auf die Hochtemperaturfestigkeit aus. Im Prinzip können auch andere Phasen wie $Y_2Si_2O_7$ und $Y_2SiO_5$ oder bei Zusatz von Aluminiumoxid auch $Y_3Al_5O_{12}$ und $Y_4Al_2O_9$ ebenfalls auskristallisieren, da sie im quinquinären Phasensystem Si-Al-Y-O-N existieren. Diese Phasen führen generell zu einer Verbesserung der Hochtemperaturfestigkeit oberhalb 1 000 °C, weil der amorphe Phasenanteil und damit die Neigung zum Kriechen verringert wird. Obwohl man Oxide fast aller Seltenen Erden als Sinterhilfsmittel für $Si_3N_4$ benutzt hat, sind bisher keine Kenntnisse bezüglich Festigkeitssteigerung infolge der Kristallisation spezifischer Phasen bekannt. Dagegen bewirkt nach einer anderen Literaturstelle ein Zusatz von Ceroxid bei der Kristallisation der Glasphase eine Erniedrigung der Festigkeit von AlN-haltigen Siliziumnitrid-Körpern im Bereich von Raumtemperatur bis etwa 900 °C (J. Mukerji et al., Ceram. Int. 13 (1987), 215).

Es bestand daher die Aufgabe, ein Verfahren anzugeben, mit dem sich die Festigkeit einer Siliziumnitrid-Keramik nicht nur bei hohen Temperaturen, sondern auch bei niedrigen Temperaturen verbessern läßt. Die vorliegende Erfindung löst diese Aufgabe.

Sie beruht auf der Erkenntnis, daß nach dem Sintern der Keramik eine thermische Nachbehandlung bei etwas tieferer Temperatur (1 200 bis 1 500 °C) zum Auskristallisieren von stickstoffhaltigen Silikaten der Seltenen Erden oder des Yttriums mit Apatitstruktur führen und daß dabei auch die Festigkeit bei tieferen Temperaturen günstig beeinflußt wird.

Es wurde nun ein Verfahren zur Herstellung einer $Si_3N_4$-Keramik hoher Festigkeit gefunden, wobei man je 100 g $\alpha$-$Si_3N_4$-Pulver mit 0,02 bis 0,2 Mol von mindestens einem der Elemente La, Ce, Pr, Nd, Sm, Eu, Gd, Tb, Dy, Ho oder mit 0,1 bis 0,2 Mol Y in Form der Oxide oder Oxidvorläufer vermischt, das Gemisch zu einem Formkörper verformt und den Formkörper bei Drucken von mindestens 1 bis 100 bar in einer Stickstoff-Atmosphäre bei Temperaturen von 1 750 bis 2 000 °C sintert. Dieses Verfahren ist dadurch gekennzeichnet, daß man den Gesinterten Körper mindestens 10 Stunden in Schutzgasatmosphäre zur Bildung von kristallinen Apatiten der Formel $A_{4+x}(SiO_4)_3N_x$ auf Temperaturen von 1 200 bis 1 500 °C erhitzt und anschließend abkühlt, wobei A das in Form des Oxids oder Oxidvorläufers zugegebene Element und x eine Zahl, die größer als 0 und maximal 1 ist, bedeutet. Die Schutzgasatmosphäre kann z. B. aus Stickstoff oder Argon bestehen. Als Oxidvorläufer lassen sich allgemein Verbindungen einsetzen, die unter den Bedingungen des Sinterns zu den entsprechenden Oxiden reagieren, insbesondere die Hydroxide and Nitrate. Als günstig erweist sich ferner die Herstellung aus Acetaten, Formiaten, Oxalaten sowie Carbonaten der genannten Metalle. Bevorzugt sind Zusätze von Sm, Eu, Gd, Tb, Dy, Ho and Y, da sich hiermit besonders hohe Festigkeiten erreichen lassen.

Überraschenderweise wird durch den Temperschritt sowohl die Festigkeit bei Raumtemperatur als auch die Festigkeit oberhalb 1 000 °C wesentlich erhöht. Die thermische Nachbehandlung sollte mindestens 10 Stunden dauern. Bevorzugt sind Reaktionszeiten von 20 Stunden oder länger. Die Nachbehandlung kann unmittelbar im Anschluß an das Sintern bei 1 750 bis 2 000°C in der Abkühlphase durchgeführt werden. Man kann aber auch gesinterte und abgekühlte Proben wieder auf die Temperatur der thermischen Nachbehandlung aufheizen.

Die Sinterdauer beträgt typischerweise 0,5 bis 5 Stunden.

Der Sauerstoffgehalt des auskristallisierenden Silikats stammt vermutlich teilweise von den dünnen $SiO_2$-Filmen, die das eingesetzte $\alpha$-$Si_3N_4$ überziehen. Üblicherweise enthält käufliches $Si_3N_4$ 0,05 bis 2 Gew.-% Sauerstoff. Es ist sinnvoll, die für die vollständige Apatitbildung erforderlich Menge an $SiO_2$ im Ansatz gegebenenfalls zu ergänzen.

Vorzugsweise findet die thermische Nachbehandlung bei Temperaturen von 1 200 bis 1 400°C statt. Bei höheren Temperaturen besteht die Gefahr, daß der Apatit wieder schmilzt, bei tieferen Temperaturen benötigt die Kristallisation zu lange Zeit. Die Bildung eines kristallinen Apatits kann mittels Röntgenbeugung nachgewiesen werden. Die d-Werte der Röntgenbeugungsreflexe solcher stickstoffhaltigen Apatite wurden mit Ausnahme von Y un Sm bisher nicht beschrieben.

Es wurde jedoch gefunden, daß die d-Werte eine lineare Abhängigkeit vom Ionenradius der eingesetzten dreiwertigen Kationen zeigen. Damit ist eine Identifizierung bisher nicht beschriebener Apatite möglich. In der Tabelle 1 sind die d-Werte der (200)- und (211)-Röntgenreflexe der Apatite $A_{4+x}(SiO_4)_3N_x$ aufgeführt und dem Ionenradius des entsprechenden $A^{3+}$-Ions gegenübergestellt.

Für die neuen Apatite konnte der Wert von x nicht exakt bestimmt werden; er ist jedoch größer als 0, kleiner als 2 und wahrscheinlich in der Nähe von 1. Dafür spricht auch die Analogie zu den bekannten Y- und Sm-Apatiten.

Um ein inniges Gemisch aus $Si_3N_4$-Pulver und Dotierstoffen zu erzielen, ist es vorteilhaft, das Gemisch gemeinsam längere Zeit zu mahlen.

Aus E. Tani et al. (Yogyo-Kyokai-Shi 94 (2), 1986, p. 303) ist bereits bekannt, daß in $Si_3N_4$-Keramik analoge Apatite der Formel $La_5(SiO_4)_3N$ und $Y_5(SiO_4)_3N$ auftreten können. Es war jedoch noch nicht bekannt, daß durch Tempern bei Temperaturen unterhalb der Sintertemperatur das Auskristallisieren solcher Apatite in der intergranularen Phase der Keramik begünstigt wird.

Es wurde ferner beobachtet, daß diese kristalline Phase zu einer deutlichen Festigkeitssteigerung sowohl bei Raumtemperatur als auch bei Temperaturen oberhalb 1 000°C führt. Bei allen anderen bisher bekannten kristallinen Zwischenkornphasen wie z. B. $Y_3Al_5O_{12}$, $Y_2Si_2O_7$, $Y_2SiO_5$, $Y_4Si_2O_7N_2$ oder $YSiO_2N$ wurde eine ähnliche Erhöhung der Festigkeit bei Raumtemperatur nicht beobachtet.

Es wurde ferner gefunden, daß der entsprechende Apatit, der sich von Y ableitet, an der Grenze des Existenzbereichs der Apatitphase liegt. Je nach Zusammensetzung (Gehalt an $Al_2O_3$) und Temperbedingungen können kinetisch kontrolliert in diesem Fall neben dem Apatit mehrere andere Y-haltige kristalline Phasen auskristallisieren, z. B. $Y_3Al_5O_{12}$ (= Y-Al-Granat) oder die Silikate $Y_2Si_2O_7$ und $Y_2SiO_5$. Nur der Apatit bewirkt eine Festigkeitserhöhung.

Werden als Sinteradditive die Seltenen Erden-Oxide $Er_2O_3$ und $Yb_2O_3$ verwendet, so kristallisiert, wie experimentell gefunden, bei ansonsten gleichem Herstellverfahren nicht der entsprechende Er- oder Yb-Apatit, sondern $Er_2SiO_5$ bzw. ein Yb-Silikat unbekannter Struktur, welches charackterisiert ist durch die d-Werte 3,93, 3,50, 3,02, 2,98, 2,90, 2,52, 2,45 und 2,27 x $20^{-8}$ cm der Röntgenbeugeungsreflexe zwischen 10 und 40 Grad 2 theta.

Für die Kristallisation des Apatits günstige Additivmengen sind, bezogen auf 100 g $Si_3N_4$, etwa 0,01 bis 0,1 Mol des Oxids $A_2O_3$, entsprechend 0,02 bis 0,2 Mol des entsprechenden Zusatzelements aus der Reihe der Seltenen Erden. Zusätze von 0 bis etwa 0,03 Mol $Al_2O_3$ pro 100 g $Si_3N_4$ ändern die Tendenz zur Auskristallisation des Apatits nicht wesentlich. Größere Mengen $Al_2O_3$ (mindestens 4 Gew.-%) verhindern eine spontane Kristallisation beim Sintern und Tempern. Vorzugsweise arbeitet man ohne Zusatz von AlN.

Im speziellen Fall von Y betragen die für die Bildung des festigkeitssteigernden Y-Apatits günstigen Additivmengen in der Mischung mindestens 12 Gew.-% $Y_2O_3$ (entsprechend 0,12 Mol Y/100 g $Si_3N_4$). Wenn die Keramik kein $Al_2O_3$ enthält, so kristallisiert ein Teil des dem zugegebenen Oxid entsprechenden Apatits bereits während des Sinterns aus. Trotzdem ist auch in diesem Fall eine weitere Festigkeitssteigerung und die Bildung von weiterem Apatit durch die angegebene thermische Nachbehandlung noch möglich. Eine thermische Nachbehandlung führt zur Kristallisation des Apatits.

Der eigentliche Mechanismus der Festigkeitserhöhung durch den Apatit (im Gegensatz zu den anderen bekannten kristallinen Zwischenkornphasen) ist unbekannt.

So kann auch nicht erklärt werden, warum bei Zusatz von Aluminiumoxid als zweites Sinteradditiv (bei Atomverhältnissen von A : Al von 1 : 0 bis 1 : 1 und Absolutmengen bis 0,03 mol $Al_2O_3$/100 g $Si_3N_4$) kein Aluminat der Seltenen Erden, sondern nur der aluminiumfreie Apatit auskristallisiert.

Die erfindungsgemäß hergestellte Siliziumnitrid-Keramik ist wegen ihrer hohen Festigkeit im gesamten Temperaturbereich von Raumtemperatur bis über 1 000°C hervorragend als Werkstoff im Maschinenbau geeignet, insbesondere zur Herstellung von Teilen für Verbrennungsmotoren, wie z. B. von Turboladerrotoren.

Die Erfindung wird durch die Beispiele näher erläutert.

## Vergleichsbeispiele 1 bis 12

Pulver von $\alpha$-Si$_3$N$_4$ (mittlere Korngröße 0,5 $\mu$m; 95 % $\alpha$-Modifikation: 5 % $\beta$-Modifikation, 2.5 % Anteil SiO$_2$). ein Oxid der Seltenen Erden und wahlweise auch Aluminiumoxid wurden in Isopropanol intensiv gemischt und in einer Attritormühle naß desagglomeriert und gemahlen. Nach dem Trocknen des Schlickers im Rotationsverdampfer wurde das so aufbereitete Pulver in einer Silikonmatrize isostatisch zu einem Grünkörper etwa der Größe 60 x 20 x 15 mm unter 300 MPa Druck gepreßt. Dieser Grünkörper wurde unter Stickstoff von 1 bar in 90 Minuten auf 1 800°C aufgeheizt, während einer Stunde isotherm bei 1 800°C gehalten und gesintert und dann während etwa 3 Stunden wieder auf Raumtemperatur abgekühlt. Aus den gesinterten Keramikkörpern wurden Prüfstäbchen der Abmessung 4,5 x 3,5 x 45 mm mit einer Diamantsäge gesägt und poliert. Die Festigkeit F$_B$ der Prüfstäbchen wurde im 4-Punkt-Biegebruchversuch mit 20.40 mm-Auflager (U.S.A. Mil.-STD 1942) sowohl bei Raumtemperatur wie bei 1 200°C in Luft untersucht.

Die Zusammensetzungen der Einsatz-Pulvermischungen und die an den Sinterkörpern gemessenen Festigkeitswerte F$_B$ (Mittelwerte) sind in der Tabelle 2 aufgeführt.

## Beispiele 13 bis 22 und Vergleichsbeispiele 23 und 24

Siliziumnitrid-Keramikkörper wurden entsprechend den Vergleichsbeispielen 1 bis 12 hergestellt. Anschließend wurden sie einer thermischen Nachbehandlung in Stickstoffatmosphäre von 1 bar unterworfen. Dabei wurden die Körper in einer Stunde auf 1 350°C aufgeheizt, 24 Stunden isotherm bei 1350°C gehalten und anschließend während 3 Stunden wieder auf Raumtemperatur abgekühlt. Die Bestimmung der 4-Punkt-Biegebruchfestigkeit erfolgte wie in den Vergleichsbeispielen 1 bis 12. Die erhaltenen Meßwerte (Mittelwerte) sind in der Tabelle 3 aufgeführt. Die Beispiele 23 und 24 sind Vergleichsbeispiele.

## Ergebnis

Allgemein zeigen die Beispiele 13 bis 22 gegenüber den Vergleichsbeispielen 1 bis 10, daß durch Tempern die Festigkeit erhöht und die Bildung entsprechender Apatite begünstigt wird.

Vergleichsbeispiel 5 zeigt, daß bei einem Ansatz ohne Al$_2$O$_3$ ein Teil des Apatits bereits während des Sinterns auskristallisiert. Beispiel 17 zeigt, daß durch die thermische Nachbehandlung die Festigkeit noch weiter gesteigert werden kann.

In Vergleichsbeispiel 10 wurden mehrere kristalline Phasen (Y$_3$Al$_5$O$_{12}$, Y$_2$SiO$_5$, Y$_{10}$Si$_3$Al$_2$O$_{13}$N$_4$) beobachtet. Es zeigt sich, daß (ohne Tempern) hohe Anteile von Y (0,16 Mol Y 100 g Si$_3$N$_4$) zusammen mit Al$_2$O$_3$ zur Bildung von Körpern führen, die nur geringe Festigkeit aufweisen. Demgegenüber zeigt Beispiel 22. daß sich diese Phasen beim Tempern bis auf Y-Al-Granat (Y$_3$Al$_5$O$_{\cdot 2}$) wieder auflösen und statt dessen Y-Apatit gebildet wird. Dabei werden Körper mit deutlich erhöhter Festigkeit erhalten. Daraus läßt sich folgern, daß für hohe Festigkeiten Gehalte an Apatit von Vorteil sind.

Bei niedrigen Mengen an Y (Vergleichsversuch 11) werden ohne Tempern keine kristallinen Phasen gebildet. Die Festigkeit der Körper bei Raumtemperatur wird dadurch (im Vergleich zu Vergleichsbeispiel 10) erhöht, die Festigkeit bei höHerer Temperatur erniedrigt. Wird dagegen getempert (Vergleichsbeispiel 23) so wird Y-Al-Granat sowie Y$_2$Si$_2$O$_7$ gebildet. Die Festigkeit wird in diesem Fall durch das Tempern nicht wesentlich beeinflußt.

Die Vergleichsbeispiele 12 und 24 zeigen, daß bei Einsatz von Er$_2$O$_3$ als Sinterhilfsmittel die Festigkeit der thermisch nachbehandelten Keramik gegenüber der nur gesinterten Keramik deutlich herabgesetzt ist, da infolge der thermischen Nachbehandlung Er$_2$SiO$_5$ auskristallisiert und kein Er-Apatit.

In Beispiel 16 wurden Pulver unter Zusatz von 0,11 Mol Sm (in Form des Oxids) 100 g Si$_3$N$_4$ und 0,027 Mol Al$_2$O$_3$ 100 g Si$_3$N$_4$ gesintert. Nach Tempern wurde der Apatit Sm$_5$(SiO$_4$)$_3$N mittels Röntgenbeugung von Cu-K$\alpha$-Strahlung nachgewiesen. Folgende Röntgenbeugungslinien (oberhalb von d = 2,5 x $10^{-8}$ cm) wurden beobachtet: d = 4,76; 4,13; 3,94; 3,48; 3,21; 3,12; 2,85; 2,81 und 2,76. Diese Werte stimmen überein mit den bekannten Werten der JCPDS-Karte Nr. 27 - 1 400.

Tabelle 1

| d-Werte der Röntgenbeugungsreflexe der Apatite $A_{4+x}(SiO_4)_3N_x$ und Radien der Ionen $A^{3+}$ | | | |
|---|---|---|---|
| A | d(200) | d(211) | Ionenradius $[10^{-8}$ cm] |
| Y | 4,08 | 2,81 | 0,893 |
| La | 4,23 | 2,92 | 1,061 |
| Ce | 4,21 | 2,90 | 1,034 |
| Pr | 4,20 | 2,90 | 1,013 |
| Nd | 4,17 | 2,87 | 0,995 |
| Sm | 4,13 | 2,85 | 0,964 |
| Eu | 4,12 | 2,84 | 0,950 |
| Gd | 4,11 | 2,83 | 0,938 |
| Tb | 4,10 | 2,82 | 0,923 |
| Dy | 4,08 | 2,81 | 0,923 |
| Ho | 4,07 | 2,80 | 0,894 |

Tabelle 2

| Hergestellte Siliziumnitrid-Keramiken, gesintert | | | | | |
|---|---|---|---|---|---|
| Bsp. Nr. | Ansatz* [Gew.-%] | | $F_B$ 25 °C [MPa] | $F_B$ 1200 °C [MPa] | Sekundäre kristalline Phasen |
| | A-Oxid | $Al_2O_3$ | | | |
| 1 | 11,5 $CeO_2$ | 2,3 | 323 | 159 | — |
| 2 | 12,4 $Pr_6O_{11}$ | 2,3 | 466 | 202 | — |
| 3 | 14,9 $Nd_2O_3$ | 2,3 | 386 | 272 | — |
| 4 | 15,5 $Sm_2O_3$ | 2,3 | 538 | 313 | — |
| 5 | 24,2 $Gd_2O_3$ | — | 276 | 180 | wenig Gd-Apatit *** |
| 6 | 16,1 $Gd_2O_3$ | 2,3 | 377 | 224 | — |
| 7 | 14,2 $Tb_4O_7$ | 2,3 | 507 | 306 | — |
| 8 | 16,5 $Dy_2O_3$ | 2,3 | 547 | 311 | — |
| 9 | 11,0 $Ho_2O_3$ | 3,0 | 562 | 341 | — |
| 10 | 15,0 $Y_2O_3$ | 3,2 | 413 | 480 | $Y_{10}Si_3Al_2O_{18}N_4$ $Y_2SiO_5$, YAG ** |
| 11 | 10,0 $Y_2O_3$ | 2,3 | 612 | 329 | — |
| 12 | 17,0 $Er_2O_3$ | 2,3 | 628 | — | — |
| Anmerkungen: | | | | | |

* Rest $Si_3N_4$

** YAG = Y-Al-Granat $Y_3Al_5O_{12}$

*** A-Apatit = $A_{4+x}(SiO_4)_3N_x$ mit x etwa 1

EP 0 361 148 A1

Tabelle 3

| Hergestellte Siliziumnitrid-Keramiken. gesintert und getempert | | | | |
|---|---|---|---|---|
| Bsp. Nr. | d. Tempern d. Sinterkörper von Beispiel | $F_B$ 25°C [MPa] | $F_B$ 1200°C [MPa] | Sekundäre kristalline Phasen |
| 13 | 1 | 439 | 326 | Ce-Apatit |
| 14 | 2 | 494 | 405 | Pr-Apatit |
| 15 | 3 | 410 | 332 | Nd-Apatit |
| 16 | 4 | 554 | 460 | Sm-Apatit |
| 17 | 5 | 337 | 265 | viel Gd-Apatit |
| 18 | 6 | 392 | 283 | Gd-Apatit |
| 19 | 7 | 555 | 436 | Tb-Apatit |
| 20 | 8 | 584 | 422 | Dy-Apatit |
| 21 | 9 | 612 | 487 | Ho-Apatit |
| 22 | 10 | 588 | 644 | Y-Apatit, YAG |
| 23 (Vergl.) | 11 (Vergleich) | 584 | 325 | YAG, $Y_2Si_2O_7$ |
| 24 (Vergl.) | 12 (Vergleich) | 500 | --- | $Er_2SiO_5$ |

## Ansprüche

1. Verfahren zur Herstellung einer $Si_3N_4$-Keramik hoher Festigkeit, wobei man je 100 g a-$Si_3N_4$-Pulver mit 0.02-0,2 mol von mindestens einem der Elemente La, Ce, Pr, Nd, Sm, Eu, Gd, Tb, Dy, Ho oder mit 0, 12 - 0,2 mol Y in Form der Oxide oder Oxidvorläufer vermischt, man das Gemisch zu einem Formkörper verformt und den Formkörper bei Drucken von 1 - 100 bar in einer Stickstoff-Atmosphäre und bei Temperaturen von 1750-2000°C sintert, dadurch gekennzeichnet, daß man den gesinterten Körper mindestens 10 Stunden in Schutzgasatmosphäre zur Bildung von kristallinen Apatiten der Formel $A_{4+x}(SiO_4)_3N_x$ auf Temperaturen von 1200 - 1500°C erhitzt und anschließend abkühlt, wobei A das in Form des Oxids oder Oxidvorläufers zugegebene Element und x eine Zahl, die größer als Null und maximal 1 ist, bedeutet.

2. Verfahren nach Anspruch 1, dadurch gekennzeichnet, daß man ein $\alpha$-$Si_3N_4$ einsetzt, das einen Sauerstoffgehalt von 0,05-2 Gew.-% aufweist.

3. Verfahren nach Anspruch 1, dadurch gekennzeichnet, daß man zur Bildung des Apatits auf Temperaturen von 1200-1400°C aufheizt.

4. Verfahren nach Anspruch 1, dadurch gekennzeichnet, daß man das Gemisch aus $Si_3N_4$-Pulver und Dotierstoffen gemeinsam mahlt.

5. Verfahren nach Anspruch 1, dadurch gekennzeichnet, daß pro 100 g$\alpha$-$Si_3N_4$-Pulver dem Ausgangsgemisch 0 - 0,06 mol Al in Form von Aluminiumoxid oder eines Oxidvorläufers einverleibt werden.

6. Gesinterter Siliciumnitrid-Formkörper, enthaltend pro 100 g $Si_3N_4$ 0,02 - 0,2 mol mindestens eines der Elemente Pr, Nd, Sm, Eu, Gd, Tb, Dy, Ho, dadurch gekennzeichnet, daß er dieses Element mindestens teilweise in Form eines Apatits der Formel $A_{4+x}(SiO_4)_3N_x$ enthält, wobei A das oben genannte seltene Erdmetall und x eine Zahl, die größer als Null und maximal 1 ist, bedeutet.

7. Gesinterter Siliciumnitrid-Formkörper gemäß Anspruch 6, dadurch gekennzeichnet, daß er 0,27 - 1,62 Gew.-% Aluminium enthält.

8. Gesinterter Siliciumnitrid-Formkörper, enthaltend einen Apatit der Formel $A_{4+x}(SiO_4)_3N_x$, wobei x eine Zahl ist, die größer als Null und maximal 1 ist, und A für eines der Elemente Y, La, Ce steht und der Körper pro 100 g $Si_3N_4$ 0,02 - 0,2 mol Ce oder La oder 0,12 - 0,2 mol Y enthält, dadurch gekennzeichnet, daß er noch 0,27 - 1,62 Gew.-% Aluminium enthält.

9. Formkörper nach einem der Ansprüche 6 - 8, dadurch gekennzeichnet, daß er aus einer im wesentlichen reinen $\beta$-$Si_3N_4$-Phase und einer sekundären Phase besteht, die kristallinen Apatit $A_{4+x}(SiO_4)_3N_x$ enthält.

10. Formkörper nach einem der Ansprüche 6-8, dadurch gekennzeichnet, daß x etwa 1 ist.

11. Verwendung eines Formkörpers nach einem der Ansprüche 6 - 8 als Bauteil für Turboladerrotoren.

6

## EINSCHLÄGIGE DOKUMENTE

EP 89116416.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| | | | V |
| X | DE - A1 - 2 910 943 (MTU MOTOREN- UND TURBINEN- UNION MÜNCHEN GMBH) * Ansprüche * | 1,3,5-8 | C 04 B 35/58 |
| X | EP - A2 - 0 237 261 (NGK INSULATORS, LTD.) * Ansprüche; Zusammenfassung * | 6-11 | |
| X | EP - A2 - 0 250 153 (NGK INSULATORS, LTD.) * Ansprüche; Seite 16, Zeilen 11,12 * | 6-8, 10,11 | |

| | RECHERCHIERTE SACHGEBIETE (Int. Cl.5) |
|---|---|
| | C 04 B |

Der vorliegende Recherchenbericht wurde für alle Patentansprüche erstellt.

| Recherchenort | Abschlußdatum der Recherche | Prüfer |
|---|---|---|
| WIEN | 06-12-1989 | BECK |